# EUROPÄISCHE PATENTSCHRIFT

(11) **EP 1 554 533 B1**
(45) Veröffentlichungstag und Bekanntmachung des Hinweises auf die Patenterteilung: **24.06.2009**
(21) Anmeldenummer: 03808688.0
(22) Anmeldetag: 01.09.2003
(51) Int. Cl.: F28D 1/053, F28D 20/02

(54) **KÄLTEMITTELVERDAMPFER**
COOLANT EVAPORATOR
EVAPORATEUR A FLUIDE FRIGORIGENE

(30) Priorität: 10.10.2002 DE 10247268
(43) Veröffentlichungstag der Anmeldung: 20.07.2005
(73) Patentinhaber: Behr GmbH & Co. KG, 70469 Stuttgart (DE)
(72) Erfinder: BUREAU, Cathy, 48009 Birmingham (US); MORGENSTERN, Stefan, 70499 Stuttgart (DE)
(74) Vertreter: Grauel, Andreas
(86) Internationale Anmeldenummer: PCT/EP2003/009673
(87) Internationale Veröffentlichungsnummer: WO 2004/036133

(56) Entgegenhaltungen:
- DE-A- 10 156 882
- DE-A- 10 156 944
- DE-A- 19 857 121
- DE-A- 19 948 943

## Beschreibung

Die Erfindung betrifft einen Kältemittelverdampfer mit einer zur Wärmeübertragung von Wärme von Luft an ein verdampfendes Kältemittel vorgesehenen Wärmeübertragungsfläche, insbesondere einer Anzahl als Rippen ausgebildeter Wärmeübertragungsflächen, und mit einer Anzahl im Wesentlichen parallel zueinander angeordneter, zur Aufnahme des verdampfenden Kältemittels vorgesehener, insbesondere als Rohre ausgebildeter, Strömungskanalabschnitte.

Kältemittelverdampfer mit den eingangs genannten Merkmalen werden beispielsweise in Klimaanlagen von Kraftfahrzeugen verwendet. Die Klimaanlage eines Kraftfahrzeuges arbeitet üblicherweise mit einem über einen Riemen vom Fahrzeugmotor angetriebenen Kompressor. Aus Gründen der Verbrauchsreduzierung sind Fahrzeuge in Gebrauch, deren Motor bei Stillstand des Fahrzeugs, z.B. an einer Ampel, automatisch abschaltet. Diese Maßnahme wird auch als ldle-Stop bezeichnet. Mit dem Abschalten des Motors ist somit auch die Klimaanlage außer Funktion gesetzt. Um dennoch auch bei Stillstand des Motors eine vorübergehende Kühlungsfunktion zu ermöglichen, ist beispielsweise in der EP 0 995 621 A2 vorgeschlagen, Kondenswasser mittels eines Kältemittelverdampfers einer Fahrzeug-Klimaanlage gezielt zu gefrieren, um somit einen Eisspeicher zu erzeugen, welcher auch bei Stillstand des Kompressors der Klimaanlage als Kältespeicher nutzbar ist. Die Bildung von Kondenswasser und damit die Möglichkeit der gezielten Vereisung des Kältemittelverdampfers ist jedoch stark von den klimatischen Bedingungen abhängig. Des Weiteren besteht die Gefahr, dass durch zu starke Vereisung die zur Wärmeübertragung nötige Luftströmung erheblich eingeschränkt oder nahezu unterbunden wird.

Ein anderer kältemittel verdampfer wird in der DE 101 56 882 A beschrieben.

Der Erfindung liegt die Aufgabe zugrunde, einen Kältemittelverdampfer, insbesondere für eine Klimaanlage eines Kraftfahrzeugs, anzugeben, welcher auf einfache und zuverlässige Weise eine Kältespeicherung ermöglicht.

Diese Aufgabe wird erfindungsgemäß gelöst durch einen Kältemittelverdampfer mit den Merkmalen des Anspruchs 1. Der Kältemittelverdampfer weist dabei eine Wärmeübertragungsfläche, vorzugsweise mehrere als Rippen ausgebildete Wärmeübertragungsflächen, zur Übertragung von Wärme von Luft an ein Kältemittel auf. Das verdampfende Kältemittel strömt im Kältemittelverdampfer in einer Anzahl im Wesentlichen parallel zueinander angeordneter, vorzugsweise als Kältemittelrohre ausgebildeter Strömungskanalabschnitte. Zumindest Teile der Strömungskanalabschnitte können im Verdampfer - zusätzlich zu gegebenenfalls vorhandenen Rippen - Wärmeübertragungsflächen zur Energieübertragung von Luft an das Kältemittel bilden. Zwischen benachbarten Strömungskanalabschnitten ist eine mit einem Wärmespeichermedium, vorzugsweise einem so genannten Latentmedium, gefüllte Speicherkapsel angeordnet, die sich über einen Teil der Höhe der der Speicherkapsel benachbarten Strömungskanalabschnitte erstreckt.

Zwischen zwei benachbarten Strömungskanalabschnitten sind mehrere, vorzugsweise mindestens vier Speicherkapsein angeordnet. Eine einzelne Speicherkapsel erstreckt sich bevor zugt über nicht mehr als 25%, insbesondere nicht mehr als 15% der Höhe der Strömungskanalabschnitte. Hierdurch weisen die damit relativ kleinen Speicherkapsein eine in Relation zu deren Volumen große gesamte Oberfläche auf. Auf diese Weise ist eine sehr effektive Wärmeübertragung sowohl zwischen den Speicherkapsein und dem in den Strömungskanalabschnittten strömenden Kältemittel als auch zwischen den Speicherkapsein und der den Verdampfer durchströmenden Luft ermöglicht.

Vorzugsweise ist insgesamt eine größere Anzahl, beispielsweise 10 bis 100, insbesondere 30 bis 60, an Speicherkapseln in mehreren zwischen einzelnen Strömungskanalabschnitten gebildeten Zwischenräumen angeordnet. Die Speicherkapseln sind dabei bevorzugt nur in einem Teil des Kältemittelverdampfers gruppiert, während der verbleibende Teil des Kältemittelverdampfers frei von Speicherkapseln ist und sich in seiner Funktion nicht von herkömmlichen Kältemittelverdampfern unterscheidet. Dagegen wirkt der die Speicherkapseln tragende, zweite Teil des Kältemittelverdampfers als so genannter Speicherverdampfer.

Der Kältemittelverdampfer kann vorzugsweise in verschiedenen Betriebsmodi betrieben werden, wobei die Luftzufuhr zu den einzelnen Teilen des Kältemittelverdampfers - mit bzw. ohne Speicherkapseln - separat regelbar ist.

In einem ersten Betriebsmodus, im normalen Fahrbetrieb, bei mittlerem Kältebedarf, ist die Luftzufuhr zu einem ersten Teil des Kältemittelverdampfers ohne Speicherkapseln geöffnet, während die Luftzufuhr zu einem zweiten Teil des Kältemittelverdampfers, in welchem die Speicherkapseln angeordnet sind, gedrosselt oder abgesperrt ist. Das in den Speicherkapseln, im zweiten Teil des Verdampfers, enthaltene Wärmespeichermedium wird auf diese Weise abgekühlt, während der zweite Teil des Verdampfers höchstens in geringem Umfang Wärme von der umgebenden Luft aufnimmt.

Steht der Kompressor - in einem zweiten Betriebsmodus der Klimaanlage - still, so wird die Luftzufuhr zu diesem zweiten Teil des Kältemittelverdampfers geöffnet, während die Luftzufuhr zum ersten, keine Speicherkapseln aufweisenden Teil des Kältemittelverdampfers geschlossen wird. Die Kühlung der zwischen den Strömungskanalabschnitten strömenden Luft bleibt somit zeitweise, beispielsweise bis zu einigen 100 Sekunden, aufrecht erhalten.

Wird, in einem dritten Betriebsmodus der Klimaanlage, vorübergehend eine sehr hohe Kälteleistung benötigt, so wird die Luftzufuhr zum gesamte Kältemittelverdampfer geöffnet. In diesem Betriebsmodus kann somit die gesamte Verdampferoberfläche zur Luftabkühlung genutzt werden.

In fertigungstechnisch besonders günstiger Weise sind die Speicherkapseln von mindestens zwei Flächenabschnitten der Wärmeübertragungsfläche gehalten. Hierbei sind Flächenabschnitte der Wärmeübertragungsfläche insbesondere gebildet aus den Oberflächen der beispielsweise als Rohre ausgebildeten Strömungskanalabschnitten sowie aus thermisch an die Strömungskanalabschnitte angekoppelten Rippen, welche sich bevorzugt jeweils zwischen benachbarten Strömungskanalabschnitten erstrecken. Die Breite der Speicherkapsel entspricht dabei bevorzugt etwa dem Abstand zweier benachbarter Strömungskanalabschnitte. Auf diese Weise ist es möglich, den Aufbau des Kältemittelverdampfers im Wesentlichen einem herkömmlichen Kältemittelverdampfer ohne Speicherkapseln anzugleichen. Die Speicherkapseln sind vorzugsweise zwischen benachbarten Strömungskanalabschnitten und/oder benachbarten Rippen des Kältemittelverdampfers ohne zusätzliche Befestigungsmittel festgeklemmt. Auf diese Weise ist auch eine gute thermische Ankopplung der Speicherkapseln an die das Kältemittel führenden Strömungskanalabschnitte erreicht.

Durch die Speicherkapseln sollte die Luftströmung zwischen den vorzugsweise als Rohre ausgebildeten Strömungskanalabschnitten nicht zu stark eingeschränkt werden. Dies ist vorzugsweise dadurch sichergestellt, dass der zwischen benachbarten Strömungskanalabschnitten gebildete Strömungsquerschnitt für die den Verdampfer durchströmende Luft höchstens zur Hälfte durch eine oder mehrere Speicherkapseln abgedeckt ist. Dies bezieht sich sowohl auf einen einzigen, insbesondere spaltförmigen, einen Strömungsquerschnitt für die Luft bildenden Zwischenraum zwischen benachbarten Strömungskanalabschnitten als auch .auf denjenigen Teil der Stirnfläche des Verdampfers, in welchem Speicherkapseln angeordnet sind, d.h. den zweiten Teil des Verdampfers, sofern dieser in einen Teil ohne und einen Teil mit Speicherkapseln unterteilt ist.

Das in den Speicherkapseln eingeschlossene Wärmespeichermedium weist vorzugsweise eine Phasenübergangstemperatur, insbesondere einen Gefrierpunkt oder einen Taupunkt, auf, welche höher ist als die Verdampfungstemperatur des Kältemittels im Kältemittelverdampfer. Die Speicherkapseln sind damit als Latentspeicher nutzbar; entsprechend wird das Wärmespeichermedium auch als Latentmedium bezeichnet.

Zu mindest einige dieser Speicherkapseln beispielsweise alle zwischen zwei beachbarten Kältemittelrohren angeordnete Kapseln, sind nach einer bevorzugten Weiterbildung strömungstechnisch, bezogen auf das Wärmespeichermedium, mit welchem die Speicherkapseln befüllt sind, miteinander verbunden und können somit auf einfache Weise gemeinsam befüllt werden.

Der Vorteil der Erfindung liegt insbesondere darin, dass in fertigungstechnisch besonders einfacher Weise durch die Einfügung von mit einem Wärmespeichermedium gefüllten Speicherkapseln zwischen benachbarten Strömungskanalabschnitten eines Kältemittelverdampfers in diesen ein Kältespeicher integriert ist.

Ein Ausführungsbeispiel der Erfindung wird nachfolgend anhand einer Zeichnung näher erläutert. Hierin zeigen:
- Fig. 1: ein erstes Ausführungsbeispiel eines Kältemittelverdampfers mit Speicherkapseln und
- Fig. 2: ein zweites Ausführungsbeispiel eines Kältemittelverdamp- fers mit Speicherkapseln.

Einander entsprechende Teile sind in beiden Figuren mit den gleichen Bezugszeichen versehen.

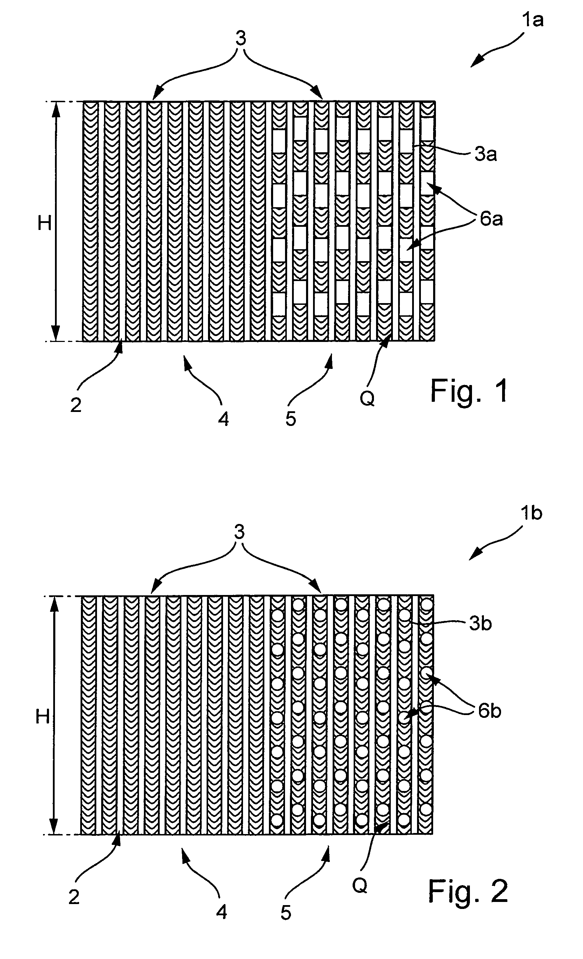

Die Fig. 1 und 2 zeigen jeweils in schematischer Frontansicht einen Kältemittelverdampfer 1 a, 1 b einer nicht weiter dargestellten Klimaanlage eines Fahrzeugs. Jeder Kältemittelverdampfer 1a, 1b, weist eine Anzahl parallel zueinander ausgerichteter, auch als Strömungskanalabschnitte bezeichneter Kältemittelrohre 2 auf. Zwischen benachbarten Kältemittelrohren 2 ist jeweils eine Vielzahl als Rippen 3 ausgebildeter Wärmeübertragungsflächen angeordnet. Die Rippen 3 dienen der Übertragung von Wärmeenergie von zwischen den Kältemittelrohren 2 strömender Luft an das in den Kältemittelrohren verdampfende Kältemittel, insbesondere R 134a. Zusätzlich zu den Rippen 3 wird auch direkt an den Oberflächen der Kältemittelrohre 2 Wärme zwischen dem Kältemittel und der den Kältemittelverdampfer 1 a, 1b durchströmenden Luft ausgetauscht. Derjenige Teil der dargestellten Stirnfläche des Kältemittelverdampfers 1 a, 1 b, der zwischen den einzelnen Kältemittelrohren 2 und Rippen 3 gebildet ist, wird als Strömungsquerschnitt Q bezeichnet. Da der Abstand zwischen benachbarten Kältemittelrohren 2 in den dargestellten Ausführungsbeispielen etwa dem Durchmesser der Kältemittelrohre 2 entspricht, beträgt der Strömungsquerschnitt Q annähernd die Hälfte der Stirnfläche des Kältemittelverdampfers 1 a, 1 b.

Jeder Kältemittelverdampfer 1 a, 1b setzt sich zusammen aus einem ersten, in den Darstellungen linken Teil 4, welcher als Verdampferteil ausgebildet ist und einem zweiten Teil 5, welcher als Verdampfer- und Speicherteil ausgebildet ist. Im Speicher- und Verdampferteil 5 sind jeweils eine Anzahl Speicherkapseln 6a, 6b angeordnet. Die im Ausführungsbeispiel nach Fig. 1 vorgesehenen Speicherkapseln 6a weisen einen rechteckigen Querschnitt auf, während die Speicherkapseln 6b im Ausführungsbeispiel nach Fig. 2 einen kreisförmigen Querschnitt haben. Generell können die Speicherkapseln unterschiedlichste Bauart haben, beispielsweise zylindrisch, quadratisch, kegelförmig, fassförmig oder pyramidenförmig. In beiden Ausführungsbeispielen nimmt der zweite Teil 5 knapp die Hälfte der Stirnfläche des Kältemittelverdampfers 1 a, 1b ein.

Im Ausführungsbeispiel nach Fig. 1 sind zwischen zwei benachbarten Strömungskanalabschnitten 2 jeweils vier Speicherkapseln 6a angeordnet, insbesondere festgeklemmt, wobei sich jede der Speicherkapseln 6a über ca. 10% der Höhe H des Kältemittelverdampfer 1a erstreckt. Hiervon abweichend sind im Ausführungsbeispiel nach Fig. 2 zwischen zwei benachbarten Strömungskanalabschnitten 2 jeweils sieben Speicherkapseln 6b festgeklemmt, wobei sich jede der Speicherkapseln 6b nur über ca. 5% der Höhe H des Kältemittelverdampfer 1a erstreckt. Um einen besonders guten Wärmeübergang zwischen dem in Speicherkapseln 6a, 6b enthaltenen Wärmespeichermedium und dem in den Strömungskanalabschnitten 2 fließenden Kältemittel zu ermöglichen sowie eine mechanisch besonders stabile Verbindung zu erreichen, kann zwischen den Speicherkapseln 6a, 6b und den an diese grenzenden Wärmeübertragungsfläch auch eine stoffschlüssige Verbindung, beispielsweise Lötverbindung vorgesehen sein.

Insbesondere bei geringer Dimensionierung der Speicherkapseln, wie im Fall der in Fig. 2 dargestellten Speicherkapseln 6b, können diese - eine ausreichende Flexibilität der Rippen vorausgesetzt - bei der Montage zwischen diese eingedrückt werden. Bei größer dimensionierten Speicherkapseln, wie im Fall der in Fig. 1 dargestellten Speicherkapseln 6a, können diese zwischen benachbarte Kältemittelrohre 2 geschoben werden, wenn die Rippen 3 in dem zur Aufnahme der Speicherkapseln 6a vorgesehenen Bereich aufgeschnitten oder entfernt sind. In jedem der Ausführungsbeispiele sind die Speicherkapseln 6a, 6b jeweils zwischen zwei benachbarten Kältemittelrohren 2 und zwei benachbarten Rippen 3 festgeklemmt. Die der Fixierung der Speicherkapseln 6a, 6b sowie der Wärmeübertragung zwischen dem Kältemittel und den Speicherkapseln 6a, 6b dienenden Kontaktflächen der Kältemittelrohre 2 beziehungsweise Rippen 3 zu den Speicherkapseln 6a, 6b sind als Flächenabschnitte 3a,3b bezeichnet.

Der Kältemittelverdampfer 1 a, 1b mit den Speicherkapseln 6a, 6b entspricht in seinem grundsätzlichen Aufbau weitgehend einem herkömmlichen Verdampfer einer Klimaanlage ohne Kältespeicherelemente für ein Fahrzeug. Gegebenenfalls notwendige Modifikationen an den Kältemittel führenden und Wärme übertragenden Bauteilen können in einfacher Weise während oder nach der Verdampferfertigung vorgenommen werden. In den Ausführungsbeispielen betreffen diese Modifikationen - abgesehen von der nicht dargestellten Luftführung zum Kältemittelverdampfer 1 a, 1b - ausschließlich die Wärmeübertragungsflächen. Der Kältemittelverdampfer 1 a, 1b eignet sich besonders für ein Fahrzeug mit ldle-Stop-System und kann mit ähnlichem Grundaufbau in einem Fahrzeugtyp sowohl mit als auch ohne ldle-Stop-Funktion eingesetzt werden. Hierbei wird in Ausstattungsvarianten ohne Idle-Stop-Funktion auf Speicherkapseln verzichtet, da in diesem Fall durch den laufenden Kompressor der Klimaanlage eine unterbrechungsfreie Kälteversorgung gegeben ist.

Mehrere oder alle Speicherkapseln 6a, 6b sind bevorzugt strömungstechnisch, beispielsweise mittels einer nicht dargestellten Leitung, miteinander verbunden, so dass die verbundenen Speicherkapseln 6a, 6b gemeinsam mit einem Wärmespeichermedium befüllt werden können. Das Wärmespeichermedium, hat einen Gefrierpunkt, der oberhalb der Verdampfungstemperatur des in den Kältemittelrohren 2 strömenden Kältemittels liegt, so dass bei Betrieb des Kältemittelverdampfers 1a, 1b das Wärmespeichermedium in den Speicherkapseln 6a, 6b einfriert. Um ein rasches Einfrieren zu gewährleisten, sind die Speicherkapseln 6a, 6b gut wärmeleitend an die Kältemittelrohre 2 gekoppelt.

Befindet sich das Fahrzeug im normalen Fahrbetrieb mit mäßigem Kühlbedarf, so wird, beispielsweise mittels nicht dargestellter Klappen, eine freie Luftströmung zum speicherkapselfreien Teil 4 des Kältemittelverdampfers 1a, 1b ermöglicht, während die Luftzufuhr zum mit Speicherkapseln 6a, 6b versehenen Teil 5 des Kältemittelverdampfers 1a, 1b gedrosselt oder unterbunden ist. Der erste Teil 4 des Kältemittelverdampfers 1 a, 1b dient damit der Kühlung der in den Fahrzeuginnenraum strömenden Luft, während im zweiten Teil 5 die Speicherkapseln 6a, 6b "aufgeladen", d.h. gekühlt werden.

Sind die Speicherkapseln 6a, 6b abgekühlt, so kann bei sehr großem Kühlluftbedarf die Luftzufuhr zum zweiten Teil 5 zusätzlich geöffnet werden. Im Übrigen wird, bei mittlerem Kühlungsbedarf, eine Luftzufuhr zum zweiten Teil 5 nur dann benötigt, wenn der Fahrzeugmotor sowie der Kältemittelkompressor im Stillstand sind. In diesem Fall wird die Luftzufuhr zum ersten Teil 4 geschlossen, während die durch den zweiten Teil 5 strömende Luft mithilfe der Speicherkapseln 6a, 6b gekühlt wird. Dabei schmilzt das in den Speicherkapseln 6a, 6b eingeschlossene, auch als Latentmedium bezeichnete Wärmeträgermedium und hält somit die Kühlung der Luft aufrecht.

Die Vielzahl einzelner Speicherkapseln 6a, 6b im zweiten Teil 5 des Kältemittelverdampfers 1 a, 1b hat den Vorteil, dass durch die damit gegebene große Gesamtoberfläche der Speicherkapseln 6a, 6b sowie deren gute thermisch Ankopplung an die Kältemittelrohre 2 und Rippen 3 eine sehr effektive Wärmeübertragung an die den Kältemittelverdampfer 1 a, 1b durchströmende Luft sichergestellt ist. Zugleich ist der Luftstrom durch den zweiten Teil 5 durch die Speicherkapseln 6a, 6b nicht zu stark eingeschränkt. Die Speicherkapseln 6a, 6b decken den Strömungsquerschnitt Q, bezogen ausschließlich auf den zweiten Teil 5 des Kältemittelverdampfers 1a, 1b, im Ausführungsbeispiel nach Fig. 1 etwa zur Hälfte und im Ausführungsbeispiel nach Fig. 2 nur etwa zu einem Viertel ab.

### Bezugszeichenliste

- 1a, 1b: Kältemittelverdampfer
- 2: Strömungskanalabschnitt
- 3: Rippe
- 3a,3b: Flächenabschnitt
- 4: erster Teil
- 5: zweiter Teil
- 6a, 6b: Speicherkapsel
- H: Höhe

## Patentansprüche

1. Kältemittelverdampfer (1) mit einer zur Wärmeübertragung von Luft an ein Kältemittel vorgesehenen Wärmeübertragungsfläche, einer Anzahl im Wesentlichen parallel zueinander angeordneter, zur Aufnahme des Kältemittels vorgesehener Strömungskanalabschnitte (2) einer Höhe (H), und zwischen zwei benachbarten Strömungskanalabschnitten (2) angeordneten, zur Füllung mit einem Wärmespeichermedium vorgesehenen, sich über einen Teil der Höhe (H) der Strömungskanalabschnitte (2) erstreckenden Speicherkapseln (6a, 6b), **dadurch gekennzeichnet, dass** zwischen zumindest zwei benachbarten Strömungskanalabschnitten (2) eine Mehrzahl von Speicherkapseln (6a, 6b) vorgesehen ist, wobei die Speicherkapseln (6a, 6b) über die Höhe des Verdampfers hinweg verteilt, und von mindestens zwei Flächenabschnitten (3a,3b) der Wärmeübertragungsfläche gehalten sind,

2. Kältemittelverdampfer (1) nach Anspruch 1,
**dadurch gekennzeichnet,**
**dass** zwei einander gegenüberliegende die Speicherkapsel (6a, 6b) haltende Flächenabschnitte (3a,3b) der Wärmeübertragungsfläche von jeweils einem Strömungskanalabschnitt (2) gebildet sind.

3. Kältemittelverdampfer (1) nach einem der Ansprüche 1 bis 2,
**dadurch gekennzeichnet,**
**dass** sich die oder jede Speicherkapsel (6a, 6b) über maximal 25 % der Höhe (H) der der Speicherkapsel (6a, 6b) benachbarten Strömungskanalabschnitte (2) erstreckt.

4. Kältemittelverdampfer (1) nach einem der Ansprüche 1 bis 3,
**dadurch gekennzeichnet,**
**dass** ein zwischen benachbarten Strömungskanalabschnitten (2) gebildeter Strömungsquerschnitt (Q) für die Wärme an das Kältemittel übertragende Luft höchstens zur Hälfte durch eine oder mehrere Speicherkapseln (6a, 6b) abgedeckt ist.

5. Kältemittelverdampfer (1) nach einem der Ansprüche 1 bis 4,
**dadurch gekennzeichnet,**
**dass** eine Phasenübergangstemperatur des Wärmespeichermediums in der Speicherkapsel (6a, 6b) höher ist als die Verdampfungstemperatur des Kältemittels in den Strömungskanalabschitten (2).

6. Kältemittelverdampfer (1) nach einem der Ansprüche 1 bis 5,
**dadurch gekennzeichnet,**
**dass** mehrere Speicherkapseln (6a, 6b) strömungstechnisch, bezogen auf das in diesen enthaltene Wärmespeichermedium, miteinander verbunden sind.

7. Klimaanlage, aufweisend einen Kältemittelverdampfer (1) nach einem der Ansprüche 1 bis 6,
**dadurch gekennzeichnet,**
**dass** die Zufuhr von Luft zu demjenigen Teil (5) der Strömungskanalabschitte (2), in welchem die zumindest eine Speicherkapsel (6a, 6b) angeordnet ist, absperrbar ist.

## Claims

1. Refrigerant evaporator (1), with a heat transfer surface for the transfer of heat from air to a refrigerant, with a number of flow duct sections (2) of a height (H) which are arranged substantially parallel to one another and designed for receiving the refrigerant, and with storage capsules (6a, 6b) located between two adjacent flow duct sections (2), designed for filling with a heat storage medium and extending along a part of the height (H) of the flow duct sections (2), **characterised in that** a plurality of storage capsules (6a, 6b) is provided between at least two adjacent flow duct sections (2), the storage capsules (6a, 6b) being distributed along the height of the evaporator and held by at least two sections (3a, 3b) of the heat transfer surface.

2. Refrigerant evaporator (1) according to claim 1,
**characterised in that**
two sections (3 a, 3b) of the heat transfer surface which are located opposite each other and hold the storage capsules (6a, 6b) are each represented by a flow duct section (2).

3. Refrigerant evaporator according to claim 1 or 2,
**characterised in that**
the or each storage capsule (6a, 6b) extends along at most 25% of the height (H) of the flow duct segments (2) adjacent to the storage capsule (6a, 6b).

4. Refrigerant evaporator according to any of claims I to 3,
**characterised in that**
a flow cross-section (Q) formed between adjacent flow duct sections (2) for the air transferring heat to the refrigerant is at most half-covered by one or more storage capsules (6a, 6b).

5. Refrigerant evaporator according to any of claims 1 to 4,
**characterised in that**
a phase transition temperature of the heat storage medium in the storage capsule (6a, 6b) is higher than the evaporation temperature of the refrigerant in the flow duct sections (2).

6. Refrigerant evaporator according to any of claims 1 to 5,
**characterised in that**
a plurality of storage capsules (6a, 6b) are connected to one another in terms of fluid technology with respect to the heat storage medium contained therein.

7. Air conditioning system comprising a refrigerant evaporator (1) according to any of claims 1 to 6,
**characterised in that**
the supply of air to that part (5) of the flow duct sections (2) in which the at least one storage capsule (6a, 6b) is located can be blocked.

## Revendications

1. Evaporateur à fluide frigorigène (1) comprenant une surface de transfert thermique prévue pour le transfert thermique d'air à un fluide frigorigène, une certaine quantité de tronçons (2) des conduits d'écoulement, d'une hauteur (H), disposés sensiblement de façon parallèle entre eux et prévus pour recevoir le fluide frigorigène, et des capsules d'accumulateur (6a, 6b) disposées entre deux tronçons adjacents (2) des conduits d'écoulement, prévues pour le remplissage avec un milieu de l'accumulateur de chaleur et s'étendant sur une partie de la hauteur (H) des tronçons (2) des conduits d'écoulement,
**caractérisé en ce qu'**il est prévu, entre au moins deux tronçons adjacents (2) des conduits d'écoulement, une pluralité de capsules (6a, 6b) de l'accumulateur, où les capsules (6a, 6b) de l'accumulateur sont réparties sur toute la hauteur de l'évaporateur et retenues par au moins deux parties planes (3a, 3b) de la surface de transfert thermique.

2. Evaporateur à fluide frigorigène (1) selon la revendication 1, **caractérisé en ce que** deux parties planes (3a, 3b) de la surface de transfert thermique, se faisant face l'une l'autre et retenant la capsule (6a, 6b) de l'accumulateur, sont formées respectivement par un tronçon (2) du conduit d'écoulement.

3. Evaporateur à fluide frigorigène (1) selon l'une ou l'autre des revendications 1 et 2, **caractérisé en ce que** la ou chaque capsule (6a, 6b) de l'accumulateur s'étend sur 25 % au maximum de la hauteur (H) des tronçons (2) des conduits d'écoulement adjacents par rapport à la capsule (6a, 6b) de l'accumulateur.

4. Evaporateur à fluide frigorigène (1) selon l'une quelconque des revendications 1 à 3, **caractérisé en ce qu'**une section d'écoulement (Q) formée entre deux tronçons adjacents (2) des conduits d'écoulement et prévue pour la chaleur fournie à de l'air transmettant le fluide frigorigène est recouverte au maximum à la moitié, par une ou plusieurs capsules (6a, 6b) de l'accumulateur.

5. Evaporateur à fluide frigorigène (1) selon l'une quelconque des revendications 1 à 4, **caractérisé en ce qu'**une température de transition de phase du milieu de l'accumulateur de chaleur, dans la capsule (6a, 6b) de l'accumulateur, est supérieure à la température d'évaporation du fluide frigorigène dans les tronçons (2) des conduits d'écoulement.

6. Evaporateur à fluide frigorigène (1) selon l'une quelconque des revendications 1 à 5, **caractérisé en ce que** plusieurs capsules (6a, 6b) de l'accumulateur sont, du point de vue de la technique d'écoulement, reliées entre elles par rapport au milieu de l'accumulateur de chaleur contenu dans ces capsules de l'accumulateur.

7. Système de climatisation présentant un évaporateur à fluide frigorigène (1) selon l'une quelconque des revendications 1 à 6, **caractérisé en ce que** l'alimentation d'air, à la partie (5) des tronçons (2) des conduits d'écoulement dans laquelle est disposée la capsule (6a, 6b) de l'accumulateur, au moins au nombre de un, peut être fermée.
